# EUROPEAN PATENT SPECIFICATION

(11) **EP 1 604 595 B1**
(45) Date of publication and mention of the grant of the patent: **15.11.2006**
(21) Application number: 04253500.5
(22) Date of filing: 11.06.2004
(51) Int. Cl.: A47J 27/04

(54) **Food steaming device**
Dampfgargerät
Cuisseur à vapeur

(43) Date of publication of application: 14.12.2005
(73) Proprietor: Li, Wen-Ching, Taipei City (TW)
(72) Inventor: Li, Wen-Ching, Taipei City (TW)
(74) Representative: Pluckrose, Anthony William

(56) References cited:
- EP-A- 0 788 754
- EP-A- 0 972 477
- EP-A- 1 380 242
- FR-A- 2 846 217
- US-A- 5 199 347

## Description

The invention relates to a food steaming device, more particularly to a food steaming device that has a heater and a water container that are separable from each other.

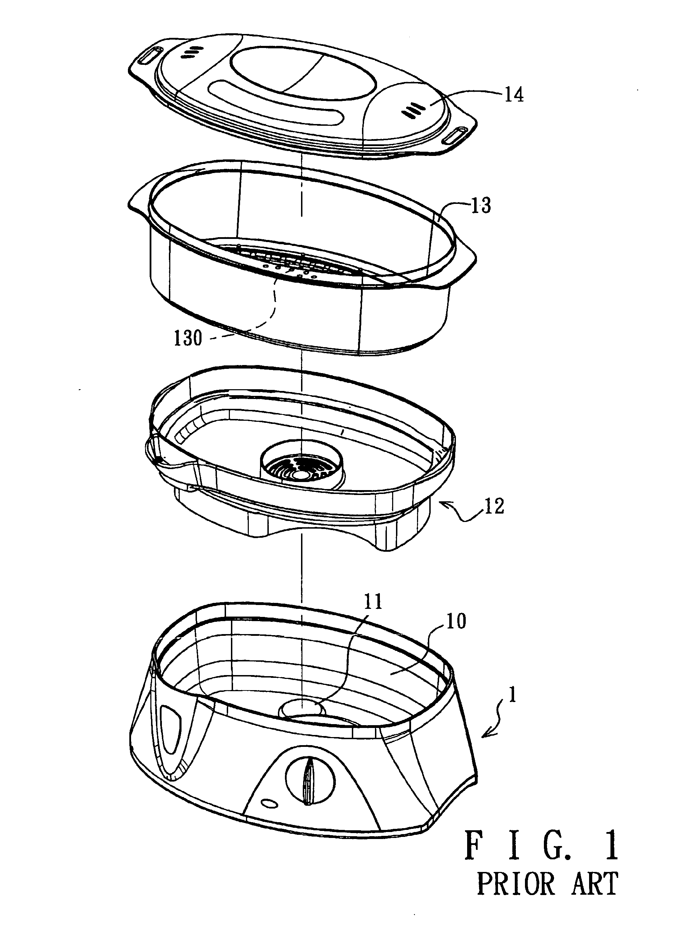

Referring to Figure 1, a currently available food steaming device has a heater 1 formed with a water receiving space 10. A cylindrical hollow protrusion 11 projects upwardly from the center of the space 10. During use, water is supplied into the space 10, and then a liquid collecting unit 12, one or more steaming trays 13 (only one is shown), and a cover 14 are stacked on the heater 1. Each of the steaming trays 13 is formed with a plurality of steam holes 130 in a bottom portion thereof.

When the heater 1 is activated, water in the space 10 is heated by the hollow protrusion 11 so as to generate steam. Steam is sent upward through a central hole in the liquid collecting unit 12 and the steam holes 130 in each steaming tray 13 so as to cook the food in the respective steaming trays 13 by a steaming operation. The drawback to this kind of food steaming device is that the water receiving space 10 is formed directly in the heater 1. To clean the space 10, therefore, the heater 1 itself has to be cleaned. Because the heater 1 has electrical wires and electronic components therein, these elements may become rusted, or more serious problems may occur, such as the short circuiting of the electronic components and the user receiving an electric shock. Hence, the food steaming device with such a configuration is not safe to use.

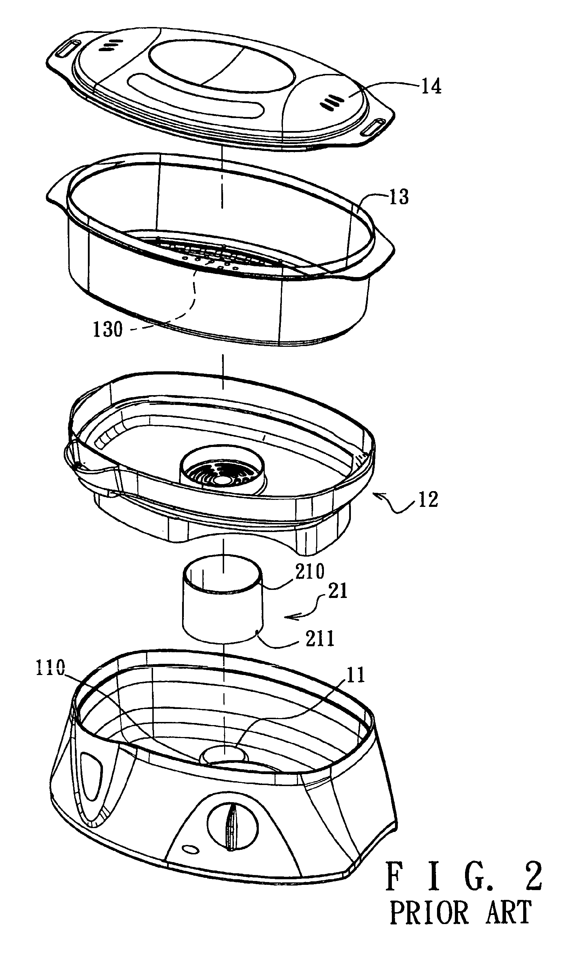

Referring to Figure 2, the aforementioned food steaming device may be further provided with a quick steam producing unit 21 mounted on the hollow protrusion 11. The quick steam producing unit 21 quickens the pace of which steam is produced. The quick steam producing unit 21 is a sleeve having a single layer tubular wall 210 formed with a water inlet 211 at a bottom periphery thereof and surrounding an outer periphery of the hollow protrusion 11. The tubular wall 210 and a peripheral wall 110 of the hollow protrusion 11 define therebetween a small space which confines a small amount of water therein that is isolated from the remainder of the water in the water receiving space 10. When the hollow protrusion 11 is heated, the water confined in the small space between the tubular wall 210 and the peripheral wall 110 of the hollow protrusion 11 is heated first, and then the water in the water receiving space 10 gradually enters said small space through the water inlet 211. Steam is thus produced quickly.

However, the single layer tubular wall 210 of the quick steam producing unit 21 is unable to thermally isolate the water inside said small space from the low temperature water outside said small space. As a result, the low temperature water surrounding the tubular wall 210 reduces the temperature of the tubular wall 210 so that a limited amount of the steam is produced by the quick steam producing unit 21. Document EP-0 788 754 discloses the preamble of claim 1.

Therefore, the main object of the present invention is to provide a food steaming device having a heater and a water container that are detachable from each other so that the water container can be cleaned independently from the other elements.

Another object of the present invention is to alleviate the problems encountered in the conventional food steaming device.

According to this invention, a food steaming device comprises a water container, a heater, a liquid collecting unit, a steaming tray, and a lid. The water container has a first bottom wall, and a surrounding wall that cooperates with the first bottom wall to define a chamber for holding water therein. The first bottom wall has a heat conductive hollow protrusion projecting from the first bottom wall into the chamber. The hollow protrusion opens at a bottom side of the first bottom wall. The heater is provided removably below the water container, and has a base, and a heating element projecting from the base into the hollow protrusion through the bottom side of the first bottom wall and connected thermally to the hollow protrusion to heat water through the hollow protrusion. The liquid collecting unit is mounted on the water container, and has a second bottom wall covering the chamber, a steam supply hole formed in the second bottom wall, and a blocking ring surrounding the steam supply hole and projecting upwardly from the second bottom wall. The steaming tray is mounted on the liquid collecting unit, and is adapted to receive food. The lid is for covering the steaming tray.

Other features and advantages of the present invention will become apparent in the following detailed description of the preferred embodiments with reference to the accompanying drawings, of which:
Figure 1 is an exploded perspective view of a currently available food steaming device;
Figure 2 is a view similar to Figure 1, but illustrating the food steaming device further provided with a quick steam producing unit;
Figure 3 is an exploded perspective view of a preferred embodiment of a food steaming device according to the present invention;
Figure 4 is a schematic view of another preferred embodiment of a food steaming device according to the present invention in an assembled state;
Figure 5 is an exploded perspective view of yet another preferred embodiment of a food steaming device according to the present invention, illustrating a heater, a water container, a quick steam producing cap, and a liquid collecting unit of the preferred embodiment; and
Figure 6 is a sectional view of the quick steam producing cap of Figure 5.

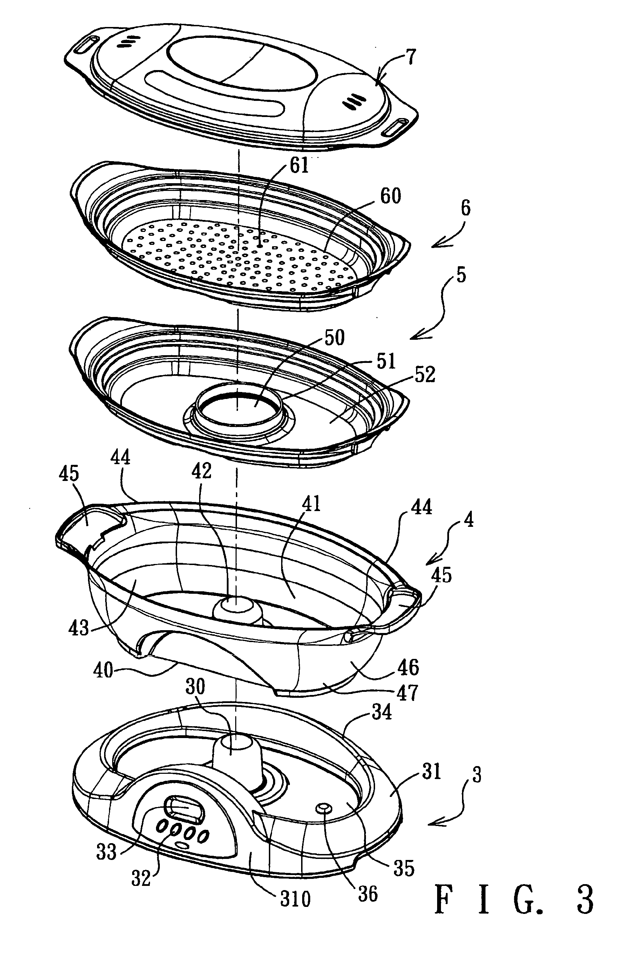

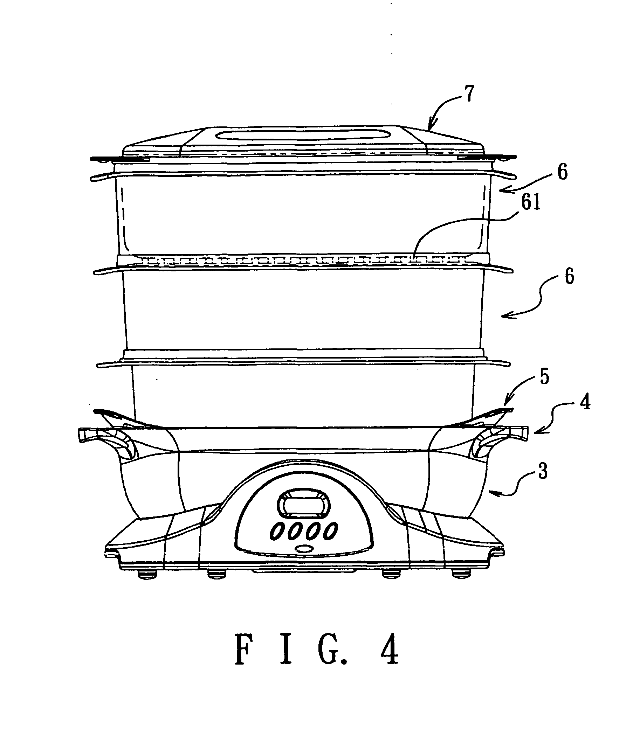

Referring to Figures 3 and 4, a preferred embodiment of a food steaming device according to the present invention is shown to comprise a heater 3, a water container 4, a liquid collecting unit 5, a steaming tray 6, and a lid 7.

The heater 3 has a base 31, and a heating element 30 projecting from a central portion of the base 31. The base 31 has an upward peripheral wall 34, and a receiving space 35 between the heating element 30 and the upward peripheral wall 34. Heat generating electronic components, a circuit board, wires, etc., are disposed inside the base 31 in a conventional manner. The base 31 is further provided with a plurality of control buttons 32 and a display 33 at one face 310 thereof to facilitate selecting and viewing of a heating condition. The heating element 30 is waterproof. Since the configuration used to realize waterproofing of the heating element 30 is known in the art, a detailed description of the same will be dispensed herewith for the sake of brevity.

The water container 4 is mounted removably on the heater 3, and has a lower portion 47 which is configured so that the lower portion 47 is substantially in sealing contact with the upward peripheral wall 34 of the base 31 when received in the receiving space 35 in the heater 3. In this embodiment, the water container 4 has a first bottom wall 40, a surrounding wall 46 that cooperates with the first bottom wall 40 to define a chamber 41 for holding water 43 therein, two handles 45 projecting upwardly, outwardly and respectively from two opposite top side portions 44 of the surrounding wall 46, and a heat conductive hollow protrusion 42 projecting from the first bottom wall 40 into the chamber 41 and opening at a bottom side of the first bottom wall 40. The hollow protrusion 42 is waterproof. Since the configuration used to realize such waterproofing is known in the art, a detailed description of the same will be dispensed herewith for the sake of brevity. The heating element 30 projects into the hollow protrusion 42 through the bottom side of the first bottom wall 40, and thermally connects with the hollow protrusion 42 so as to heat the water 43 in the chamber 41.

The liquid collecting unit 5 is mounted on the water container 4, and has a second bottom wall 52 covering the chamber 41, a central steam supply hole 50 formed in the second bottom wall 52, and an annular blocking ring 51 surrounding the steam supply hole 50 and projecting upwardly from the second bottom wall 52.

The steaming tray 6 is mounted on the liquid collecting unit 5, and is adapted to receive food. The steaming tray 6 has a third bottom wall 60 formed with a plurality of steam holes 61. The steaming tray 6 may be provided as a single unit, as shown in Figure 3, may be provided in duplicate, as shown in Figure 4, or three or more of the steaming trays 6 may be provided depending on the quantity of food to be cooked. In this embodiment, one or two of the steaming trays 6 are used as shown respectively in Figures 3 and 4.

The lid 7 covers the uppermost steaming tray 6.

With particular reference to Figure 4, the water container 4 is first stacked on the heater 3, then the liquid collecting unit 5 and two of the steaming trays 6 are subsequently stacked on the heater 3 in this sequence, after which the lid 7 is placed to cover the uppermost steaming tray 6. When electricity is supplied to the heater 3, heat is generated from the heating element 30 to the hollow protrusion 42 so that the water 43 in the water chamber 41 is heated and vaporized. Vapor is sent upward from the steam supply hole 50 through the steam holes 61 in each of the steaming trays 6 so as to cook the different foods in the steaming trays 6.

Because the water container 4 is made as an individual element in this embodiment, it is easy to handle, and it can be cleaned separately from the other elements. Therefore, washing of the heater 3 may be avoided such that the electronic components inside the heater 3 do not become wet. The end result is that rusting of the electronic components do not occur, and other problems and dangers, such as short circuiting of the electronic components and the user receiving an electric shock are prevented, thereby making the food steaming device of the present invention safe to use.

Furthermore, during steaming, food juices from each of the steaming trays 6 drip into the liquid collecting unit 5 for reuse or disposal. The blocking ring 51 prevents the food juices from dripping into the water 43 in the chamber 41 of the water container 4 so that the water container 4 is not stained and is thus easy to clean, the flavors of the foods in each of the steaming trays 6 can be preserved, and the steam is maintained in an odorless state.

Referring once again to Figure 3, the heater 3 is further provided with a safety switch 36 disposed in the base 31, and is connected electrically to the circuit board (not shown) inside the base 31 in a known manner. When the water container 4 is seated on the heater 3, the lower portion 46 of the water container 4 is received in the receiving space 35, and presses down the safety switch 36, thereby activating the heating element 30. When the water container 4 is removed from the heater 3, the safety switch 36 is deactivated so that the heater 3 is turned off, thereby preventing scalding due to accidental contact with the heating element 30 of the heater 3.

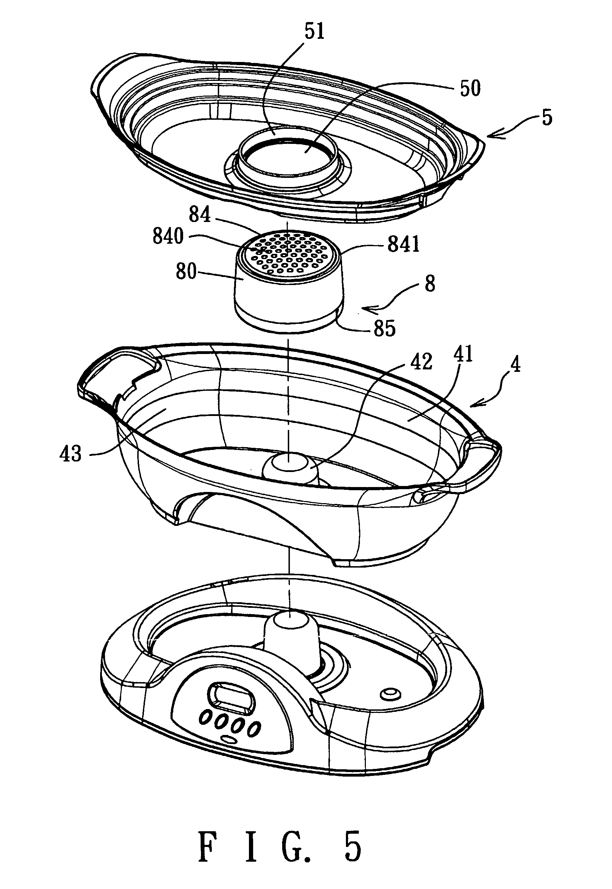

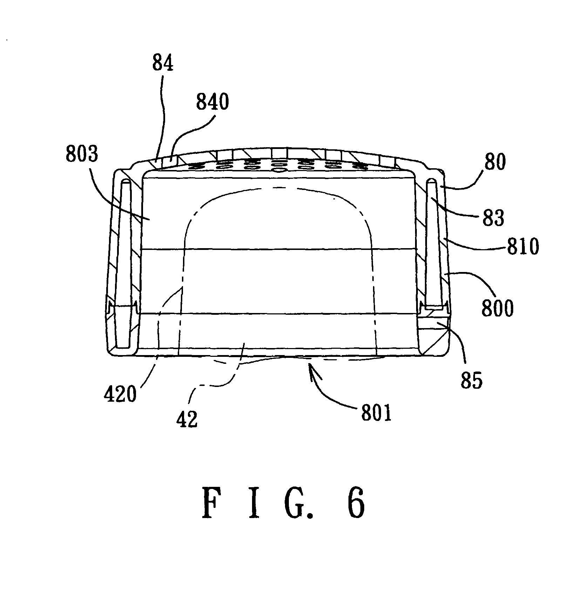

Referring to Figures 5 and 6, the food steaming device of the present invention may further comprise a quick steam producing cap 8 disposed around an outer periphery 420 of the hollow protrusion 42 of the water container 4. The quick steam producing cap 8 includes a jacketed tubular wall 80, and a top end wall 84 covering one end of the tubular wall 80. The jacketed tubular wall 80 has inner and outer wall layers 800, 810, a sealed insulating space 83 defined between the inner and outer wall layers 800, 810, a bottom open end 801, and a water inlet 85 proximate to the bottom open end 801 and extending through the inner and outer wall layers 800, 810 so as to communicate fluidly with the quick steam producing cap 8. The top end wall 84 has a plurality of perforations 840 intercommunicating fluidly the steam holes 61 (see Figure 3) and the quick steam producing cap 8, and a peripheral end 841 in sealing contact with the blocking ring 51 of the liquid collecting unit 5. The inner wall layer 800 has an inner diameter larger than the outer diameter of the heat conductive hollow protrusion 42.

In use, the quick steam producing cap 8 covers the outer periphery 420 of the hollow protrusion 42. The water 43 in the water container 4 enters the quick steam producing cap 8 through the water inlet 85, and fills up a receiving space 803 defined by the inner wall layer 800 and the outer periphery 420 of the hollow protrusion 42. The water level in the receiving space 803 eventually becomes equal to that of the water 43 in the water container 4. When heat is transmitted by the hollow protrusion 42 to the water 43 in the water receiving space 803, the water 43 vaporizes quickly and is sent upward through the perforations 840 and the steam supply hole 50. The hot water 43 in the water receiving space 803 and the low temperature water 43 in the water chamber 41 are separated thermally by the sealed insulating space 83 of the jacketed tubular wall 80, so that the temperature of the water 43 in the water receiving space 803 is not lowered. Hence, the rate of producing steam using the quick steam producing cap 8 of the present invention is far greater than that obtained when using the currently available quick steam producing cap 21 shown in Figure 2.

## Claims

1. A food steaming device:
a water container (4) having a first bottom wall (40) and a surrounding wall (46) that cooperates with said first bottom wall (40) to define a chamber (41) for holding water (43) therein;
a heater (3);
a liquid collecting unit (5) mounted on said water container (4), and having a second bottom wall (52) covering said chamber (41), a steam supply hole (50) formed in said second bottom wall (52), and a blocking ring (51) surrounding said steam supply hole (50) and projecting upwardly from said second bottom wall (52);
a steaming tray (6) mounted on said liquid collecting unit (5), and adapted to receive food; and
a lid (7) for covering said steaming tray (6), **characterized in that** said first bottom wall (40) has a heat conductive hollow protrusion (42) projecting from said first bottom wall (40) into said chamber (41), said hollow protrusion (42) opening at a bottom side of said first bottom wall (40) and the heater (3) is provided removably below said water container (4), and has a base (31), and a heating element (30) projecting from said base (31) into said hollow protrusion (42) through said bottom side of said first bottom wall (40) and connected thermally to said hollow protrusion (42) to heat water (43) through said hollow protrusion (42).

2. The food steaming device as claimed in Claim 1, **characterized in that** said base (31) has an upward peripheral wall (34) and a receiving space (35) between said heating element (30) and said upward peripheral wall (34), said water container (4) having a lower portion (47) received in said receiving space (35) and in sealing contact with said upward peripheral wall (34) of said base (31).

3. The food steaming device as claimed in Claim 1, **characterized in that** said heater (3) further has a safety switch (36) disposed in said base (31) to be pressed downwardly by said water container (4).

4. The food steaming device as claimed in Claim 1, **characterized in that** said steaming tray (6) has a plurality of steam holes (61).

5. The food steaming device as claimed in Claim 1, further **characterized by** a quick steam producing cap (8) provided around said hollow protrusion (42), and including a jacketed tubular wall (80) which has a sealed insulating space (83), and a top end wall (84) covering one end of said tubular wall (80), said tubular wall (80) having a bottom open end (801) and a water inlet (85) proximate to said bottom open end (801), said top end wall (84) having a plurality of perforations (840).

6. The food steaming device as claimed in Claim 5, **characterized in that** said top end wall (84) has a peripheral end (841) in sealing contact with said blocking ring (51), said perforations (840) intercommunicating fluidly said steam holes (61) and said quick steam producing cap (8).

## Patentansprüche

1. Vorrichtung zum Dampfgaren von Nahrungsmitteln, umfassend:
einen Wasserbehälter (4), der eine erste untere Wand (40) und eine umgebende Wand (46) aufweist, die mit der genannten ersten unteren Wand (40) zusammenwirkt, um eine Kammer (41) zum Aufnehmen von Wasser (43) in dieser zu bilden;
eine Heizeinrichtung;
eine Einheit (5) zum Sammeln von Flüssigkeit, die auf dem genannten Wasserbehälter (4) gehalten ist, und die eine zweite untere Wand (52) aufweist, die die genannte Kammer (41) abdeckt, eine Dampfzuführungsöffnung (50), die in der genannten zweiten unteren Wand (52) ausgebildet ist, und einen Blockierungsring (51), der die genannte Dainpfzuführungsöffnung (50) umgibt und von der genannten zweiten unteren Wand (52) nach oben vorsteht;
eine Dampfgarungsschale (6), die auf der genannten Einheit (5) zum Sammeln von Flüssigkeit gehalten ist, und die dazu angepaßt ist, Nahrungsmittel aufzunehmen;
und einen Deckel (7) zum Abdecken der genannten Dampfgarungsschale (6),
**dadurch gekennzeichnet, daß** die genannte erste untere Wand (40) einen wärmeleitenden hohlen Vorsprung (42) aufweist, der von der genannten ersten unteren Wand (40) in die genannte Kammer (41) hinein vorsteht, wobei der genannte hohle Vorsprung (42) an einer Unterseite der genannten ersten unteren Wand (40) geöffnet ist, und daß die Heizeinrichtung (3) abnehmbar unterhalb des genannten Wasserbehälters (4) angeordnet ist und eine Basis (31) und ein Beheizungselement (30) aufweist, das von der genannten Basis (31) in den genannten hohlen Vorsprung (42) hinein vorsteht, durch die genannte Unterseite der genannten ersten unteren Wand (40) hindurch, und thermisch mit dem genannten hohlen Vorsprung (42) verbunden ist, um Wasser (43) durch den genannten hohlen Vorsprung (42) hindurch zu erwärmen.

2. Vorrichtung zum Dampfgaren von Nahrungsmitteln nach Anspruch 1, **dadurch gekennzeichnet, daß** die genannte Basis (31) eine nach oben gerichtete, über den Umfang verlaufende Wand (34) und einen Aufnahmeraum (35) zwischen dem genannten Beheizungselement (30) und der genannten nach oben gerichteten, über den Umfang verlaufenden Wand (34) aufweist, wobei der genannte Wasserbehälter (40) einen unteren Abschnitt (47) aufweist, der in dem genannten Aufnahmeraum (35) aufgenommen ist und sich in abdichtendem Kontakt mit der genannten nach oben gerichteten, über den Umfang verlaufenden Wand (34) der genannten Basis (31) befindet.

3. Vorrichtung zum Dampfgaren von Nahrungsmitteln nach Anspruch 1, **dadurch gekennzeichnet, daß** die genannte Heizeinrichtung (3) weiterhin einen Sicherheitsschalter (36) aufweist, der in der genannten Basis (31) angeordnet ist, um durch den genannten Wasserbehälter (4) nach unten gedrückt zu werden.

4. Vorrichtung zum Dampfgaren von Nahrungsmitteln nach Anspruch 1, **dadurch gekennzeichnet, daß** die genannte Dampfgarungsschale (6) eine Anzahl von Dampföffnungen (61) aufweist.

5. Vorrichtung zum Dampfgaren von Nahrungsmitteln nach Anspruch 1, weiter **gekennzeichnet durch** eine schnell Dampf erzeugende Kappe (8), die um den genannten Bodenvorsprung (42) herum angeordnet ist und eine doppelwandige rohrförmige Wand (80) aufweist, die einen abgedichteten isolierenden Zwischenraum (83) aufweist, und eine obere endseitige Wand (84), die ein Ende der genannten rohrförmigen Wand (80) abdeckt, wobei die genannte rohrförmige Wand (80) ein offenes unteres Ende (801) und einen Wassereinlaß (85) benachbart zu dem genannten offenen unteren Ende (801) aufweist, wobei die genannte obere endseitige Wand (84) mit einer Anzahl von Perforationen (840) versehen ist.

6. Vorrichtung zum Dampfgaren von Nahrungsmitteln nach Anspruch 5, **dadurch gekennzeichnet, daß** die genannte obere endseitige Wand (84) ein über den Umfang verlaufendes Ende (841) in abdichtendem Kontakt mit dem genannten Blockierungsring (51) aufweist, wobei die genannten Perforationen (840) die genannten Dampföffnungen (61) und die genannte schnell Dampf erzeugende Kappe (8) strömungsmäßig miteinander in Verbindung setzen.

## Revendications

1. Cuiseur vapeur comprenant :
un réservoir d'eau (4) comportant une première paroi inférieure (40) et une paroi environnante (46) qui coopère avec la première paroi inférieure (40) pour définir une chambre (41) pour y contenir de l'eau (43) ; un dispositif de chauffage (3) ;
une unité de récupération de liquide (5) montée sur le réservoir d'eau (4), et comportant une deuxième paroi inférieure (52) recouvrant la chambre (41), un trou d'acheminement de vapeur (50) formé dans la deuxième paroi inférieure (52), et un anneau de blocage (51) entourant le trou d'acheminement de vapeur (50) et se projetant vers le haut depuis la deuxième paroi inférieure (52);
un plateau de cuisson à la vapeur (6) monté sur l'unité de récupération de liquide (5), et adapté pour recevoir les aliments ; et
un couvercle (7) destiné à recouvrir le plateau de cuisson à la vapeur (6),
**caractérisé en ce que**
la première paroi inférieure (40) comporte une avancée creuse conductrice de chaleur (42) en saillie depuis la première paroi inférieure (40) dans la chambre (41), l'avancée creuse (42) s'ouvrant au niveau d'un côté inférieur de la première paroi inférieure (40) et le dispositif de chauffage (3) est disposé de manière amovible sous le réservoir d'eau (4), et comporte une base (31), avec un élément chauffant (30) en saillie depuis la base (31) dans l'avancée creuse (42) à travers le côté inférieur de la première paroi intérieure (40) et relié thermiquement à l'avancée creuse (42) pour chauffer l'eau (43) à travers l'avancée creuse (42).

2. Cuiseur vapeur selon la revendication 1,
**caractérisé en ce que**
la base (31) comporte une paroi périphérique montante (34) et un espace de réception (35) entre l'élément chauffant (30) et la paroi périphérique montante (34), le réservoir d'eau (4) ayant une partie plus basse (47) reçue dans l'espace de réception (35) et en contact d'étanchéité avec la paroi périphérique montante (34) de la base (31).

3. Cuiseur vapeur selon la revendication 1,
**caractérisé en ce que**
le dispositif de chauffage (3) comprend en outre un interrupteur de sécurité (36) disposé dans la base (31) pour être abaissé par le réservoir d'eau (4).

4. Cuiseur vapeur selon la revendication 1,
**caractérisé en ce que**.
le plateau de cuisson à la vapeur (6) comporte une pluralité de trous de vapeur (61).

5. Cuiseur vapeur selon la revendication 1,
**caractérisé par**
un chapeau de production de vapeur rapide (8) disposé autour de l'avancée creuse (42), et comprenant une paroi tubulaire doublée (80) qui présente un espace isolant étanche (83), et une paroi d'extrémité supérieure (84) recouvrant une extrémité de la paroi tubulaire (80), la paroi tubulaire (80) ayant une extrémité ouverte inférieure (801) et une arrivée d'eau (85) proche de l'extrémité ouverte inférieure (801), la paroi d'extrémité supérieure (84) comportant une pluralité de perforations (840).

6. Cuiseur vapeur selon la revendication 5,
**caractérisé en ce que**
la paroi d'extrémité supérieure (84) comporte une extrémité périphérique (841) en contact étanche avec l'anneau de blocage (51), les perforations (840) intercommuniquant de manière fluidique avec les trous de vapeur (61) et le chapeau de production de vapeur rapide (8).
